# EUROPEAN PATENT APPLICATION

(11) **EP 3 540 565 A1**
(43) Date of publication of application: **18.09.2019**
(21) Application number: 17857667.4
(22) Date of filing: 07.08.2017
(51) Int. Cl.: G06F 3/01, G06F 3/16, G06F 17/28, G10L 13/00, G10L 15/00

(54) **CONTROL METHOD FOR TRANSLATION DEVICE, TRANSLATION DEVICE, AND PROGRAM**

(30) Priority: 11.11.2016 JP 2016220987; 05.07.2017 JP 2017132069
(71) Applicant: Panasonic Intellectual Property Management Co., Ltd., Osaka-shi, Osaka 540-6207 (JP)
(72) Inventor: SAEKI Natsuki, Osaka-shi Osaka 540-6207 (JP); MIURA Koji, Osaka-shi Osaka 540-6207 (JP)
(74) Representative: Grünecker Patent- und Rechtsanwälte PartG mbB
(86) International application number: PCT/JP2017/028512
(87) International publication number: WO 2018/087969

(57) **Abstract**

Impeding of smooth conversation via a translation device is suppressed. A translation device includes a microphone, a sensor that detects an attitude of the translation device, and a display screen. In a control method of the translation device, audio signals indicating audio from a first user are generated by the microphone (S104), and change in the attitude of the translation device, detected by the sensor, is detected, and second text, generated by translation processing performed on first text obtained by speech recognition of the audio signals generated until detection of change in attitude of the translation device, is displayed on the display screen (S108).

## Description

### Technical Field

The present invention relates to a control method of a translation device, the translation device, and a program.

### Background Art

PTL 1 discloses a translated speech reproduction device, which is placed between two people who speak different languages from each other, performs translation from one to the other of a first language and a second language, and reproduces speech after translation. This translated speech reproduction device suitably presents speech after translation to a listener by controlling the direction in which the speech after translation is output.

### Citation List

### Patent Literature

PTL 1: Japanese Unexamined Patent Application Publication No. 2011-150657

### Summary of Invention

It is required of a translation device having speech translation functions to translate words that one of two people speaks and communicate to the other, bidirectionally and automatically. However, there is a problem that if explicit input operations by the two are required to present translation results, this could impede smooth conversation of the two.

Accordingly, the present invention presents a control method of a translation device, and so forth, that suppresses impeding of smooth conversion via a translation device.

In a control method of a translation device according to an aspect of the present disclosure, the translation device includes a microphone, a sensor that detects an attitude of the translation device, and a display screen. The control method includes: generating audio signals indicating audio from a first user by the microphone; and upon detecting change in the attitude of the translation device, detected by the sensor, displaying second text generated by translation processing performed on first text obtained by speech recognition of the audio signals, on the display screen.

These general or specific aspects may be realized by a system, a method, an integrated circuit, a computer program, or a computer-readable recording medium such as a CD-ROM, and may be realized by any combination of a system, method, computer program, and recording medium.

The control method of the translation device according to the present disclosure enables impeding of smooth conversion via a translation device to be suppressed.

### Brief Description of Drawings

Fig. 1 is a block diagram illustrating the configuration of a translation device according to an embodiment.
Fig. 2 is an explanatory diagram illustrating an example of information stored in a conversation management storage unit according to the embodiment.
Fig. 3 is an explanatory diagram of attitude information of the translation device according to the embodiment.
Fig. 4 is an explanatory diagram regarding detection of inclination according to the embodiment.
Fig. 5 is an explanatory diagram illustrating an example of an image used to decide settings values in the embodiment.
Fig. 6 is an explanatory diagram illustrating an example of an image prompting setting of a reference language according to the present embodiment.
Fig. 7 is a flowchart illustrating main processing of the translation device according to the embodiment.
Fig. 8 is a flowchart illustrating recording-start processing of the translation device according to the embodiment.
Fig. 9 is a flowchart illustrating recording-end processing of the translation device according to the embodiment.
Fig. 10 is a flowchart illustrating confirmation processing of speech recognition results according to the embodiment.
Fig. 11 is an explanatory diagram of a display screen according to the embodiment.
Fig. 12 is an explanatory diagram of displayed content of a display screen according to the embodiment.

### Description of Embodiments

### (Underlying Knowledge Forming Basis of the Present Disclosure)

The Present Inventor has found that the following problem occurs in relation to the control method of the translation device described in the "Background Art" section.

Translation devices having speech translation functions (e.g., portable translation devices) need to correctly detect a section from a start point of speech, which is the input thereof, to an end point, and take the detected section as the object of translation, in order to yield correct translation results. Conventionally, a method of detecting a soundless section or the like, has been studied for detection of the start point and the end point of speech in speech recognition processing. However, there is a problem of being readily affected by noise, environmental sounds, and so forth, and detection of soundless sections is not appropriately performed, and so forth. Also, the need to create soundless sections, which originally is unnecessary, in order to perform speech recognition processing, generates originally-unnecessary speech less states during the conversation, which can be a factor impeding smooth conversation.

PTL 1 discloses a technology where the conversion direction (translation direction) in language between the two people conversing is detected by a sensor detecting inclination of the device, and displays information of translation results that is appropriate for the viewer. Although PTL 1 presents a method for deciding the translation direction in order to supplement smooth conversation of the users, there is no disclosure whatsoever regarding what the translation device uses as a trigger to perform processing including translation processing, results display processing, and so forth. For example, if intentional operations by the users are necessary for each and every one of the aforementioned processing, this may impede smooth conversation between the two people.

The present invention provides a control method of a translation device and so forth that enables impeding of smooth conversion when presenting translation results to be suppressed.

In order to solve this problem, in a control method of a translation device according to an aspect of the present disclosure, the translation device includes a microphone, a sensor that detects an attitude of the translation device, and a display screen. The control method includes: generating audio signals indicating audio from a first user by the microphone; and upon detecting change in the attitude of the translation device, detected by the sensor, displaying second text generated by translation processing performed on first text obtained by speech recognition of the audio signals, on the display screen.

According to the above aspect, the translation device displays second text generated by translation processing on the display screen, triggered by detection of change in attitude of the translation device during conversation between a speaker (first user) and listener (second user), to be visually recognized by the listener. The speaker can easily change the attitude of the translation device, by naturally inclining the translation device while speaking. Accordingly, impeding of smooth conversation via the translation device can suppressed.

For example, when detecting change in the attitude of the translation device, change in attitude of the translation device is detected by detecting that a presentation direction, which is a direction parallel to a normal of the display screen and is a direction for the display screen to present images, has neared a direction set beforehand as a direction from the translation device toward a second user who receives speech by the first user, by a first predetermined angle.

According to the above aspect, the translation device can display the second text generated by translation processing on the display screen, triggered by the display screen of the translation device being inclined toward the listener, so as to be visually recognized by the listener. Generally, if a speaker in a conversation has something that he/she wants the listener to visually recognize, he/she would inline that object, which he/she wants to be visually recognized so as to be visible to the listener. The aforementioned something that he/she wants to be visually recognized is equivalent to the second text, which is a translation of the content of speech of the speaker, in a case of conversation via translation. That is to say, the translation device can present the text of the translation results to the listener through a natural action of inclining the translation device so that the something that the speaker wants the listener to see is visible to the listener. Thus, the translation device can perform translation without sacrificing smoothness of conversation, which is to say that impeding of smooth conversion via the translation device can be suppressed.

For example, in the control method, further, upon detecting that the presentation direction has drawn closer to a direction set beforehand as a direction toward the first user from the translation device by a second predetermined angle, generating of the audio signals by the microphone is started.

According to the above aspect, the translation device starts recording speech by the speaker, triggered by the display screen of the translation device being inclined toward the speaker. It is assumed that with conversation using translation devices in general, in a case of a speaker wanting the translation device to understand (or acquire) the content of his/her own speech, the speaker will turn the display screen of the translation device toward him/herself, hoping that his/her own voice will be clearly understood by the translation device. That is to say, the translation device can start recording the voice of the speaker by a natural action of inclining the translation device so as to make his/her own speech understandable to the translation device. Thus, the translation device can perform translation without sacrificing smoothness of conversation.

For example, in the control method, further, upon detecting that the presentation direction has been distanced from a direction set beforehand as a direction toward the first user from the translation device by a third predetermined angle, generating of audio signals by the microphone is ended, the first text is obtained by performing speech recognition processing on the audio signals, and the obtained first text is displayed on the display screen.

According to the above aspect, the translation device ends recording speech by the speaker, triggered by the display screen of the translation device being inclined away from the speaker. It is assumed that with conversation using translation devices in general, in a case of a speaker ending his/her own speech, performing an action opposite to that of starting recording will be able to realize ending, which is the opposite concept to starting. That is to say, the translation device can end recording the voice of the speaker by a natural action of inclining the translation device in the opposite direction from the direction of inclination of the translation device when starting recording, due to thinking to end recording, which is a concept opposite to starting recording. Thus, the translation device can perform translation without sacrificing smoothness of conversation.

For example, in the control method, further, upon detecting that the presentation direction has drawn closer to the direction set beforehand as the direction toward the first user from the translation device by the first predetermined angle after displaying the first text on the display screen, generating of new audio signals is started.

According to the above aspect, in a case where the speech recognition results by the translation device 1 are different from its own intent, the translation device starts recording speech by the speaker again. The speaker is provided with means to start recording again, i.e., to redo the recording, by inclining the translation device in the same way as when starting recording the first time. Thus, the translation device can perform translation without sacrificing smoothness of conversation.

For example, the translation device stores correlation information correlating the attitude of the translation device and language information indicating a language for performing speech recognition processing in the attitude. The control method further includes performing the speech recognition processing using a language indicated by language information correlated with the attitude of the translation device at the current point in time in the correlation information.

According to the above aspect, the translation device can appropriately select the language to use for the speech recognition processing, based on correlation with attitude.

For example, in the control method, further, translation processing is performed using a language indicated by language information correlated with the attitude of the translation device at the current point in time in the correlation information, as a translation source language.

According to the above aspect, the translation device can appropriately select the language to use for the translation processing, based on correlation with attitude.

For example, in the control method, further, an image is displayed on the display screen in accordance with the detected attitude of the translation device.

According to the above aspect, the translation device can communicate change in the attitude of the translation device to the speaker or listener. Accordingly, the speaker or listener can handle the translation device while recognizing the state of the translation device, i.e., the processing that the translation device is performing, and unintended operations by the translation device can be proactively avoided.

For example, display of the image in accordance with the attitude of the translation device includes displaying the image in accordance with a difference in angle between a presentation direction that is a direction parallel to a normal of the display screen and is a direction for the display screen to present images, and a direction set beforehand as a direction toward a second user who receives speech by the first user or a direction set beforehand as a direction from the translation device toward the first user.

According to the above aspect, the translation device can communicate the state of the translation device to the speaker or listener, based on even more specific processing based on an angle between the presentation direction and the listener or speaker.

For example, display of the image in accordance with the attitude of the translation device includes displaying the image in accordance with the presentation direction that is a direction parallel to a normal of the display screen and is a direction for the display screen to present images having drawn close toward the direction set beforehand as the direction toward the second user who receives the speech by the first user, by a first predetermined angle, or having drawn close toward the direction set beforehand as the direction toward the first user, by a second predetermined angle.

According to the above aspect, the translation device can communicate the state of the translation device to the speaker or listener, based on even more specific processing based on change in an angle between the presentation direction and the listener or speaker.

Also, a translation device according to an aspect of the present disclosure includes: a microphone; a sensor that detects an attitude of the translation device; an audio input control unit that generates audio signals indicating audio from a first user by the microphone; and a display control unit that, upon detecting change in the attitude of the translation device detected by the sensor, displays second text generated by translation processing performed on first text obtained by speech recognition of the audio signals, on a display screen.

The above aspect yields the same advantages as the above control method of the translation device.

A program according to an aspect of the present disclosure causes a computer to execute the above-described control method.

The above aspect yields the same advantages as the above control method of the translation device.

It should be noted that these general or specific embodiments may be implemented as a system, a method, an integrated circuit, a computer program, or a computer-readable recording medium such as a CD-ROM, and may be realized by any combination of a system, method, integrated circuit, computer program, and recording medium.

An embodiment will be described below in detail with reference to the drawings.

Note that the embodiments described below are all specific examples of the present disclosure. Accordingly, values, shapes, materials, components, placements and connected states of components, steps, the order of steps, and so forth illustrated in the following embodiments, are only exemplary, and do not restrict the present disclosure. Components in the following embodiments which are not included in an independent Claim indicating the highest concept are optionally addable components.

### (Embodiment)

A translation device that suppresses smooth conversation via a translation device from being impeded will be described in the present embodiment. This translation device translates, in conversation between two users using different languages from each other, the content of speech from the usage language of one of the two people into the other.

Note that "usage language" is a term used employed for using the translation device. More specifically, "usage language" indicates a language used when the speaker in a conversation speaks in a translation source language toward the translation device, and a translation target language that a listener in the conversation receives from the translation device. The usage language is the native language of the user, as a rule, but is not restricted to this. It is assumed that this translation device will be placed between the two users. Note that the speaker is also referred to as a first user, and a listener is received to as a second user. The speaker and the listener switch as the conversation advances.

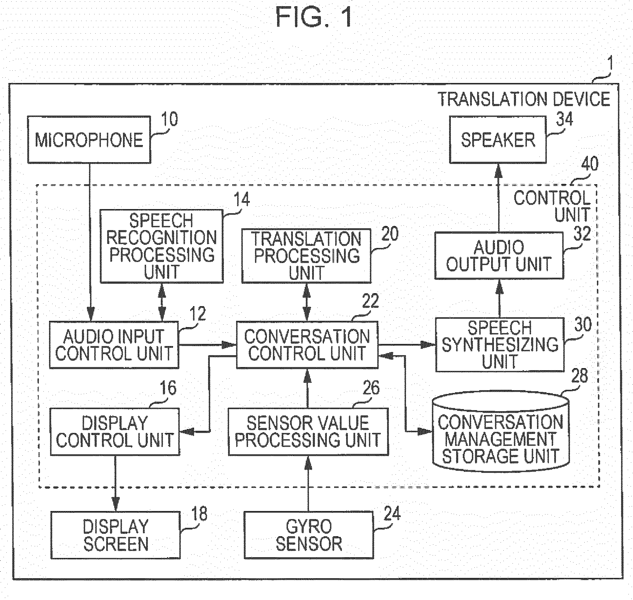

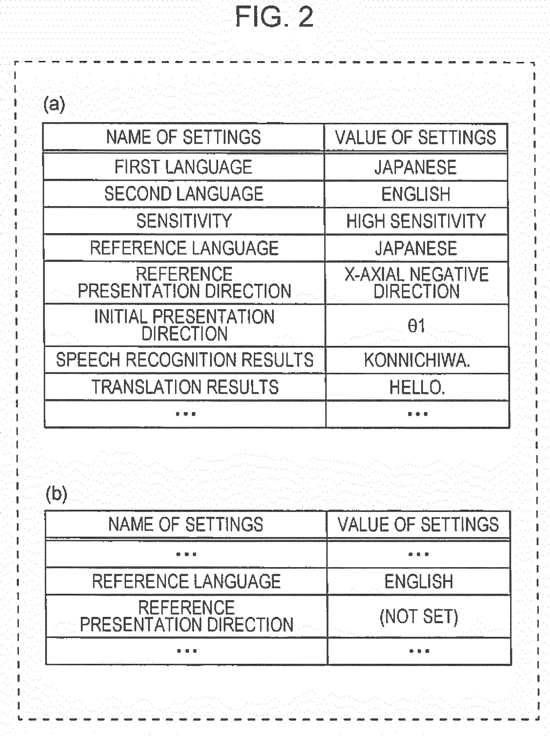

Fig. 1 is a block diagram illustrating the configuration of a translation device 1 according to the present embodiment. Fig. 2 is an explanatory diagram illustrating an example of information saved in a conversation management storage unit 28 according to the present embodiment.

As illustrated in Fig. 1, the translation device 1 has a microphone 10, an audio input control unit 12, a speech recognition processing unit 14, a display control unit 16, a display screen 18, a translation processing unit 20, a conversation control unit 22, a sensor value processing unit 26, a gyro sensor 24, a conversation management storage unit 28, a speech synthesizing unit 30, an audio output unit 32, and a speaker 34. Note that the audio input control unit 12 and so forth included in the control unit 40 indicated by the dotted line frame in Fig. 1 may be realized by dedicated hardware, or may be realized by a processor (omitted from illustration) of a computer executing a program using memory (omitted from illustration) or the like, i.e., by software. The translation device 1 may be realized as a portable translation device that can be carried by the user by hand, and more specifically may be realized by a smartphone, a tablet, a personal computer, or the like.

The microphone 10 is a microphone device that collects the voice of the speaker, converts the collected voice into audio signals, and outputs the audio signals.

The audio input control unit 12 records the audio signals input from the microphone 10. The audio input control unit 12 controls the timing for starting of recording and ending of recording of audio signals, based on control by the sensor value processing unit 26. Specifically, the timing is decided by whether or not recording is being performed, and whether or not a sensor value generated by the gyro sensor 24 has exceeded a sensor value threshold value that has been set beforehand. Note that a section from starting of recording to ending of recording will also be referred to as an audio section. The timing of starting of recording and ending of recording of audio will be described later in detail.

The speech recognition processing unit 14 performs speech recognition processing on the audio signals included in the audio section obtained by the audio input control unit 12, and generates text data (hereinafter also referred to simply as text) based on language information that has been set beforehand, and the input audio signals. The text (equivalent to first text) generated by the speech recognition processing unit 14 is information made to of characters that can be processed by a program. This text is displayed on the display screen 18 as speech recognition results. The speech recognition processing unit 14 can be realized by known speech recognition processing technology.

The display control unit 16 is a processing unit that generates image data of an image to be presented to the listener, and displays an image on the display screen 18 based on the generated image data. Upon detecting change in attitude of the translation device 1 detected by the gyro sensor 24, the display control unit 16 displays, on the display screen 18, second text, generated by performing translating processing on the first text obtained by speech recognition having been performed on audio signals generated until detection of change in attitude of the translation device 1. The later-described attitude of the translation device 1 that the gyro sensor 24 obtains, and the language of the user that speaks, are saved in the conversation management storage unit 28. The user viewing the display screen 18 can be identified by using this information. Accordingly, images displayed on the display screen 18 can be switched, so as to improve the convenience of the user.

The display screen 18 is a display device that displays images. The display screen 18 displays the first text generated by the speech recognition processing unit 14, text according to translation target language that the translation processing unit 20 has generated, and so forth, under control by the display control unit 16.

The translation processing unit 20 receives text that is the object of translation, and information indicating the translation source language and the translation target language, from the conversation control unit 22 that controls the translation direction of the input language, translates the text from the specified translation source language to the translation target language, and provides text obtained as a result of the translation to the conversation control unit 22. This text is equivalent to second text. The translation processing unit 20 can be realized by known translation processing technology.

In parallel with the conversation performed between the speaker and the listener, the conversation control unit 22 controls the speech recognition processing unit 14, translation processing unit 20, and so forth, to provide the listener with the translation results. The conversation control unit 22 obtains the text that the speech recognition processing unit 14 has generated from the audio input control unit 12, and provides the display control unit 16 and translation processing unit 20 with the obtained text. The conversation control unit 22 also obtains text as the results of translation from the translation processing unit 20, and provides this to the display control unit 16 and speech synthesizing unit 30. The conversation control unit 22 also detects change in the attitude of the translation device 1 based on attitude information indicating the attitude of the translation device 1, which is obtained from the sensor value processing unit 26, and controls the operation timing of the speech recognition processing unit 14, translation processing unit 20, and so forth. Note that when detecting change in the attitude of the translation device 1, the conversation control unit 22 may detect change in the attitude of the translation device 1 by detecting that a presentation direction, which is a direction parallel to the normal of the display screen 18 and is a direction for the display screen 18 to present images, has neared a direction set beforehand as a direction from the translation device 1 toward the listener, by a predetermined angle. Note that the initial presentation direction used for detection of change in the attitude of the translation device 1 may be stored in the conversation management storage unit 28 beforehand, such as when shipping the translation device 1 or the like, or may be stored in the conversation management storage unit 28 at the start of translation conversation using the translation device 1. Note that in a case where presentation of the translation results by speech synthesis is unnecessary, presentation of text to the speech synthesizing unit 30 is unnecessary.

The gyro sensor 24 is a sensor that measures angular velocity, and provides sensor values obtained by measurement to the sensor value processing unit 26.

The sensor value processing unit 26 is a processing unit that obtains and processes sensor values generated by the gyro sensor 24. The sensor value processing unit 26 detects the attitude of the translation device 1 based on the sensor value generated by the gyro sensor 24, and generates attitude information indicating the detected attitude. The sensor value processing unit 26 provides the generated attitude information to the conversation control unit 22. Note that the attitude of the translation device 1 is in a one-on-one relation with the "presentation direction", which is a direction parallel to the normal of the display screen 18 and is a direction for the display screen 18 to present images. Hereinafter, the attitude of the translation device 1 may also be expressed as the "presentation direction".

The conversation management storage unit 28 is a storage device that stores settings information used for conversation of two people that use the translation device 1, with settings names and settings values correlated. Several items necessary for translated conversation have to be decided in the translation device 1 before starting conversation, since speaking is performed alternately between two people, and each user uses a different language.

The conversation management storage unit 28 saves the items that have to be decided as settings information (see Fig. 2). The settings information includes first language, second language, sensitivity, reference language, reference presentation direction, initial presentation direction, speech recognition results, and translation results, as illustrated in Fig. 2.

The first language and second language are information indicating each of the two different languages that the two people who will converse use.

Sensitivity is information indicating the sensitivity of the translation device 1 detecting change in attitude.

Reference language is information indicating which language of the first language and second language that a user who speaks following the current point in time will use.

The reference presentation direction is information indicating a presentation direction where the display screen 18 is directed toward the user who will speak after the current point in time.

The initial presentation direction is information indicating the presentation direction of the display screen 18 at a point in time set beforehand as an initial point in time. The aforementioned "point in time set beforehand as an initial point in time" is a timing before the speaker speaking (equivalent to later-described step S201), during speaking (equivalent to later-described step S301), and while displaying speech recognition results (equivalent to later-described step S402), for example.

The speech recognition results are text indicating the results of speech recognition processing performed on the speech of the speaker.

Translation results are text indicating the results of the translation processing performed on the speech recognition results.

For example, (a) in Fig. 2 illustrates settings information saved in the conversation management storage unit 28 in a case where the two people of a user who uses Japanese and a user who uses English are using the translation device 1 and the speaker is the user of English. The translation device 1 uses this settings information to perform display of images in Japanese when the presentation direction is nearer to the direction of the speaker, and perform display of images in English when the presentation direction is nearer to the direction of the listener. Also, (b) in Fig. 2 illustrates settings information in a case where the reference language is set to English.

The speech synthesizing unit 30 obtains text in the translation target language that the translation processing unit 20 has generated, and converts the obtained text into audio signals to be output to the audio output unit 32.

The audio output unit 32 outputs the audio signals to be output to the speaker 34.

The speaker 34 is a sound device that converts audio signals input from the audio output unit 32 into sound (vibration of air). The synthesized speech emitted from the speaker 34 is listened to by the user as the results of translation.

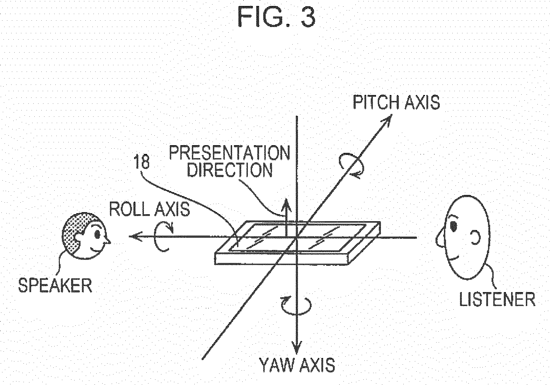

Fig. 3 is an explanatory diagram of attitude information of the translation device 1 according to the present embodiment.

The attitude information indicating the attitude of the translation device 1 is values indicating how far the translation device 1 has rotated on each axis of three axes (yaw axis, roll axis, and pitch axis) from a predetermined reference attitude, i.e., three angles, as illustrated in Fig. 3 for example. The reference attitude may be any attitude, and for example may be the attitude of the display screen 18 illustrated in Fig. 3, based on the positional relation between the speaker and the listener.

The presentation direction is a direction parallel to the normal of the display screen 18 and is a direction in which the display screen 18 presents images, and is a direction that is fixedly set as to the translation device 1, as described earlier. The presentation direction is uniquely identified by three angles, which are angles formed as to three axes orthogonal in three-dimensional space.

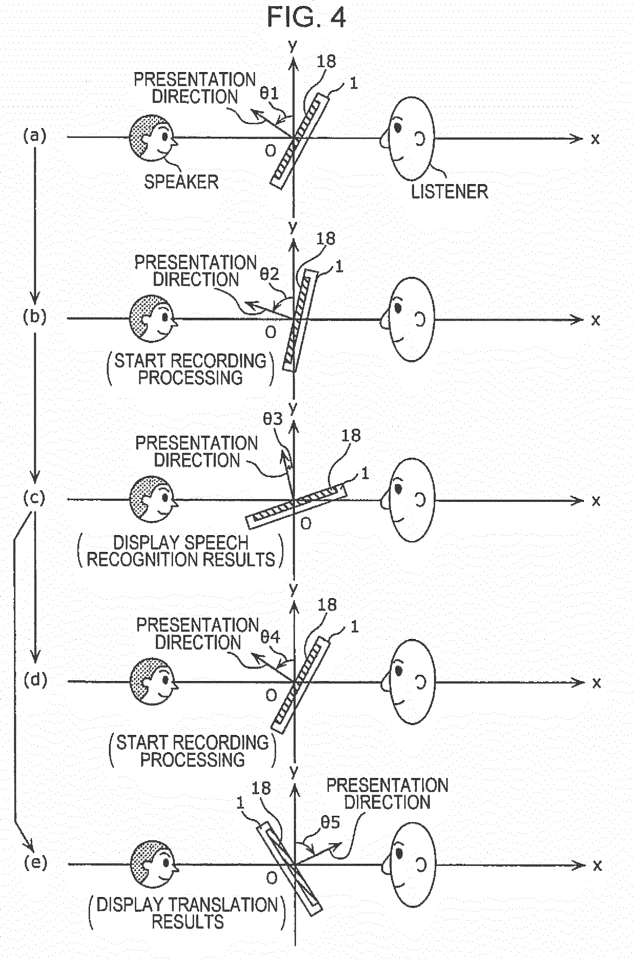

A feature of the translation device 1 configured as described above is that each processing is executed with change in attitude of the translation device 1 as a trigger. This will be described with reference to Fig. 4. In Fig. 4, for the sake of description, a midpoint on a line segment connecting the speaker and listener is an origin O, an axis connecting the speaker and listener is the x axis, with the direction from the speaker toward the listener being the positive direction on the x axis. An axis in the vertical direction from the origin O as to the speaker and the listener is the y axis, with the direction toward above the speaker and the listener being the positive direction on the y axis. Note that this arrangement of coordinate axes described above is only one example for description, and that the same description can be made with coordinate axes being arranged in other positions and directions.

Note that the direction set beforehand as a direction from the translation device 1 toward the first user is equivalent to the negative direction on the x axis, and the direction set beforehand as a direction from the translation device 1 toward the second user is equivalent to the positive direction on the x axis.

In Fig. 4, (a) indicates the attitude of the translation device 1 before performing recording of audio. At this time, the presentation direction of the display screen 18 is a direction inclined from the positive direction on the y axis toward the negative direction on the x axis by an angle θ1. The attitude of the translation device 1 illustrated in (a) in Fig. 4 is one example of the initial presentation direction.

Upon having detected that the presentation direction has turned from the attitude of the translation device 1 illustrated in (a) in Fig. 4 to a direction nearing the negative direction on the x axis by a predetermined angle, the translation device 1 starts recording audio. At this time, the presentation direction is a direction that has inclined toward the negative direction on the x axis from the positive direction on the y axis, by an angle θ2 that is larger than the angle θ1 ((b) in Fig. 4). The translation device 1 turning as described above can also be expressed as the display screen 18 facing toward the speaker, or the perceived area of the display screen 18 visually recognized by the speaker increasing. Note that the lower limit of the range that the angle θ2 can assume is the above θ1. Although the upper limit of the angle θ2 is not restricted in particular, around 90 degrees, for example, is advantageous in that there is no hindrance in the listener visually recognizing the display screen 18.

Upon detecting that the presentation direction of the translation device 1 has turned from the attitude of the translation device 1 illustrated in (b) in Fig. 4 in a direction farther away from the negative direction on the x axis by a predetermined angle, the translation device 1 ends recording of audio, and displays the text obtained as the result of speech recognition processing on the display screen 18. At this time, the presentation direction of the display screen 18 is a direction inclined from the positive direction on the y axis toward the negative direction on the x axis by an angle θ3 that is smaller than the aforementioned θ2 ((c) in Fig. 4). Note that the angle θ3 may be zero degrees, i.e., where the display screen 18 is parallel to the x axis. The translation device 1 turning as described above can also be expressed as the presentation direction being distanced from the speaker, or the perceived area of the display screen 18 visually recognized by the speaker decreasing.

For example, if the speaker says, "good morning", the generated text is the speech of "good morning" that has been input as audio signals, and is the text that has been generated via speech recognition processing; in other words, having been converted so as to be able to be processed by a program. Text relating to this text is displayed on the display screen 18 in the usage language of the speaker. The speaker can confirm the text that is the speech recognition results displayed on the display screen 18, and judge whether or not his/her own speech has been correctly recognized by the translation device 1.

From the state illustrated in (c) in Fig. 4, the speaker can take either of the two actions of the following (1) and (2). The translation device 1 can execute either of the two processing of the following (i) and (ii).
(1) In a case where the results of speech recognition processing do not match the content that he/she has spoken, the speaker can take an action of causing the translation device 1 to re-record. This is because performing translation with the content not matching that spoken by him/herself will give translation results different from that intended, which is inappropriate.
   Specifically, in a case where the content does not match that spoken by the speaker, the speaker changes the attitude of the translation device 1 so that the display screen 18 is directed toward him/herself ((d) in Fig. 4). Accordingly, the audio input control unit 12 performs processing of erasing (cancelling) the speech recognition results. Thus, the speaker can avoid the translation device 1 performing translation processing using speech recognition results not agreeing with the intent of him/herself, and can redo recording of audio.
(2) In a case where the results of speech recognition processing match the content that he/she has spoken, the speaker can take an action of causing the translation device 1 to perform translation processing, and communicate the translation results to the other person.

Specifically, in a case where the content matches that spoken by the speaker, the speaker changes the attitude of the translation device 1 so that the presentation direction nears the direction of the listener ((e) in Fig. 4). Accordingly, the translation device 1 performs translation processing by the translation processing unit 20, using the text generated by the speech recognition processing unit 14.

The two processing (i) and (ii) that the translation device 1 can execute are listed below.
(i) Upon detecting that translation device 1 has turned from the attitude of the translation device 1 illustrated in (c) in Fig. 4 toward a direction where the presentation direction nears the negative direction on the x axis by a predetermined angle, the translation device 1 starts re-recording of audio. At this time, the presentation direction of the display screen 18 is in a direction that has inclined from the positive direction on the y axis toward the negative direction on the x axis by an angle θ4 that is larger than the aforementioned angle θ3 ((d) in Fig. 4). Note that the lower limit of the range that the angle θ4 can assume is the aforementioned θ3. The upper limit of the angle θ4 is not restricted in particular, but may be around 90 degrees, from the same reason as the angle θ2, for example.
(ii) Upon detecting that translation device 1 has turned from the attitude of the translation device 1 illustrated in (c) in Fig. 4 by a predetermined angle toward the positive direction on the x axis, and the presentation direction is in a direction inclined from the positive direction on the y axis toward the positive direction on the x axis by an angle θ5, the translation device 1 displays text after translation, obtained as the result of translation processing, on the display screen 18 ((e) in Fig. 4). Note that the angular range of the angle θ5 is not restricted in particular, but around 30 degrees to 90 degrees, for example, is advantageous in that the display screen 18 is readily visually recognized by the listener.

Thus, the translation device 1 the translation device 1 takes directing the display screen 18 toward the user who should visually recognize the display screen 18, after speech recognition processing or translation processing or the like, as a trigger for executing subsequent processing.

For example, conventional audio section determination is triggered by a pressing operation of a button or the like by a user. As opposed to this, detection of audio sections can be realized by a natural method, by detecting change in the attitude of the translation device 1 (change from (a) to (b) in Fig. 4, and change from (b) to (c)), according to the above-described technique of the audio input control unit 12. The change in attitude of the translation device 1 follows a natural flow of operations that the speaker and so forth perform when inputting audio, when confirming speech recognition results, and when presenting translation results to the listener. Accordingly, impeding of smooth conversation can be suppressed by this change in attitude. Further, operations of pressing a button or the like becomes unnecessary, so there is no need for the translation device 1 to have an operating interface such as a button or the like. This contributes to improved design of the translation device 1 and to reduction in size.

In a conversation between two people, the two people alternately speak, so the language of the speech input to the translation device 1 also alternates. Determination of the language that the current speaker is using is made from the attitude of the translation device 1 when the speaker is speaking, and from the information of "first language", "second language", "reference language", and "reference presentation direction", saved in the conversation management storage unit 28. The usage language of the speaker is also referenced in order to correctly recognize the audio signal data when the speech recognition processing unit 14 performs speech recognition processing. This is also used for the translation processing unit 20 to decide the translation source language and translation target language.

Note that in the above, the threshold value of the angle for determining whether or not the attitude of the translation device 1 has changed can be adjudged by settings information.

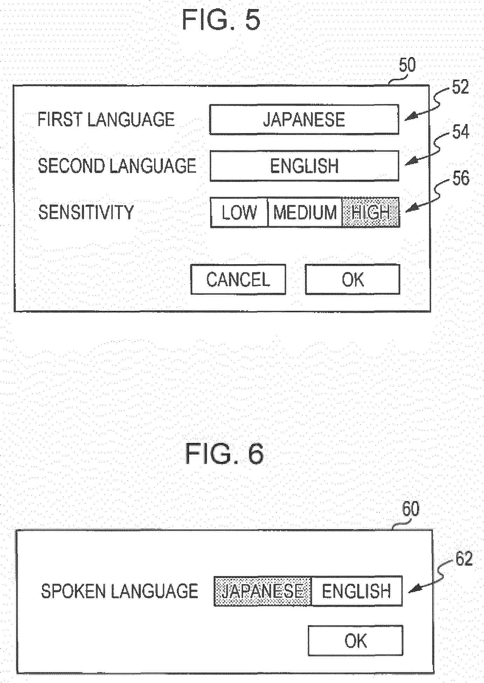

Fig. 5 is an explanatory diagram illustrating an example of an image 50 that prompts setting of a reference language, according to the present embodiment. Specifically, the image 50 illustrated in Fig. 5 is an example of an image for performing settings of settings information saved in the conversation management storage unit 28.

The image 50 includes buttons 52 and 54 for setting the "first language" and "second language" respectively, which are the languages that the two people who are conversing use, and a button 56 for setting "sensitivity" that indicates the sensitivity of detection of change in the attitude of the translation device 1.

The button 52 has a text string indicating the language selected as the first language ("Japanese" in Fig. 5), and can be switched to another language by a touch operation by the user on the button 52.

The button 54 has a text string indicating the language selected as the second language ("English" in Fig. 5), and can be switched to another language by a touch operation by the user on the button 54.

The button 56 is a button for setting the sensitivity of attitude. The sensitivity of attitude is information indicating the sensitivity of detecting change in the attitude of the translation device 1, and can be switched between three stages of "high", "medium", and "low", for example. The sensitivity of attitude is reflected in the threshold value regarding the amount of change of sensor values that the gyro sensor 24 generates. In a case of setting the sensitivity of attitude to "high", the above threshold value is set to a small value. Accordingly, even a relatively small change in attitude of the translation device 1 will cause the amount of change in attitude to exceed the threshold value, and the change in attitude is detected.

Now, it is assumed that the translation device 1 will often be used in Japan in business sectors that serve foreign tourists. Accordingly, the first language may be a prescribed value such as "Japanese" which will be used often, taking into consideration the convenience of the user. In this case, the second language is substantially the only item to be selected by the user when the user uses the translation device 1 .

Fig. 6 is an explanatory diagram illustrating an example of an image 60 prompting setting of the reference language, according to the present embodiment. Specifically, the image 60 is an example of an image prompting setting of the language to be used for the first utterance.

The image 60 includes a button 62 for selecting a spoken language.

The button 62 is a button for switching between the first language and the second language, regarding which will be used for the first utterance. The language used for the first utterance is the text string "Japanese" indicating the first language, and the text string "English" indicating the second language. The button 62 accepts a user selection regarding which to these two languages to be used for the first utterance.

In a translated conversation using a device, the language to be used for the first utterance needs to be decided from audio and so forth relating to that utterance. In a case where it is difficult to make this decision automatically, a user selection regarding the language to be used for the first utterance is necessary. The language selected in the image 60 illustrated in Fig. 6 is set in the "reference language" item in the settings information saved in the conversation management storage unit 28. The presentation direction of the translation device 1 at the time of the first utterance is obtained by the gyro sensor 24, and this presentation direction is stored as the "reference presentation direction" in the settings information in the conversation management storage unit 28. Accordingly, in a case where the presentation direction of the translation device 1 is within a predetermined angular range from the reference presentation direction, determination can be made that the speaker who is the user of the translation device 1 uses the reference language as the usage language. Otherwise, judgement can be made that the one of the first language and second language that is not the reference language will be used as the language for the utterance. Thus, subsequent distinguishing of spoken languages can be decided by the presentation direction of the translation device 1.

The operations of the translation device 1 configured in this way will be described below.

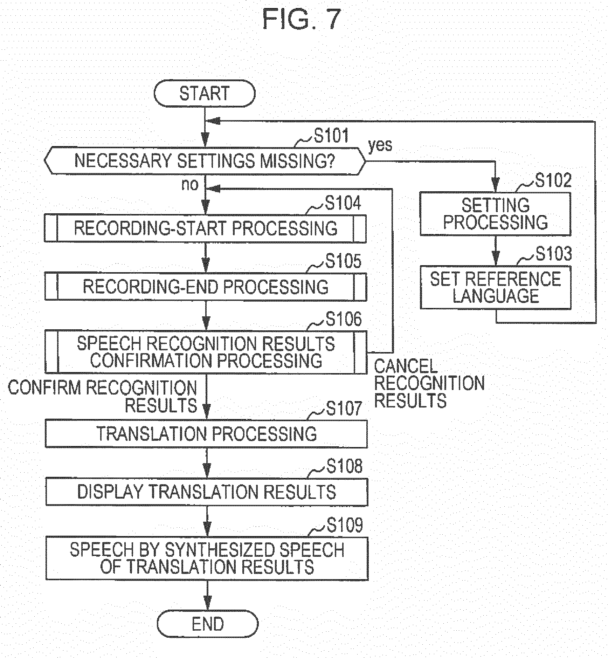

Fig. 7 is a flowchart illustrating main processing of the translation device 1 according to the present embodiment.

In step S101, the conversation control unit 22 determines whether or not settings necessary for proceeding with translation conversation processing using the translation device 1 are missing. Settings necessary for translation conversation processing here are, out of the settings items saved in the conversation management storage unit 28, the "first language", "second language", "sensitivity", and "reference language". In a case where any one of these information is missing (yes in S101), the flow advances to step S102. Otherwise, the (no in step S101), the flow advances to step S104. Note that the reference presentation direction is obtained by obtaining the presentation direction at the time of the speaker speaking later in the language indicated by the reference language, and setting the obtained presentation direction as the new reference presentation direction. This enables the presentation direction corresponding to the speaker using the reference language to be known. Conversely, the language out of the first language and second language that is not the reference language is correlated as a language used when the presentation direction is facing the direction that is not the reference presentation direction.

In step S102, the conversation control unit 22 performs processing to make settings necessary for proceeding with the translation conversation processing. Specifically, the conversation control unit 22 displays an image (e.g., image 50 in Fig. 5) to prompt settings necessary to proceed with translation conversation processing, on the display screen 18 via the display control unit 16. In a case where the translation device 1 is to be used in Japan in business sectors that serve foreign tourists, a prescribed value of the first language may be Japanese, or the like, taking into consideration the convenience of the user. In this case, the "second language" is substantially the only item to be selected by the user.

The sensitivity of attitude is the degree of difference between the presentation direction before the attitude of the translation device 1 changes, and the presentation direction after changing, due to operations by the speaker as illustrated in (b), (c), (d), and (e) in Fig. 4, that will cause the state of the translation device 1 to be transitioned, in three stages ("high", "medium", and "low").

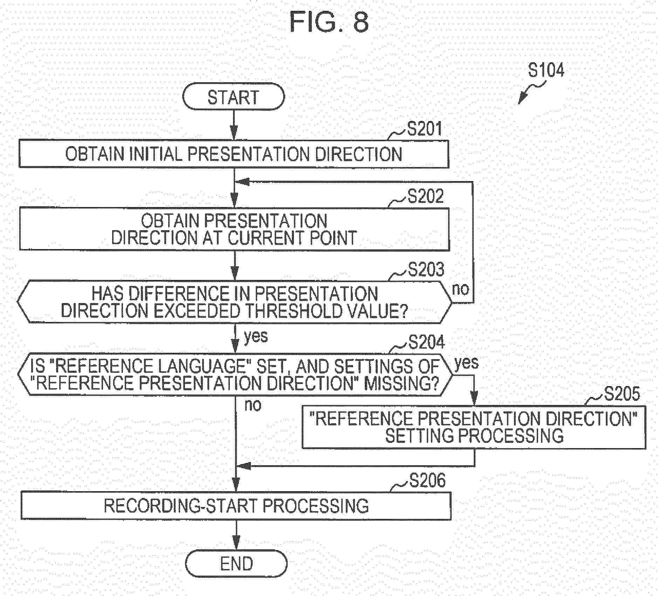

In step S103, the conversation control unit 22 performs settings of the reference language. The reference language is one of the first language and second language set in step S102, and is saved in the conversation management storage unit 28. Now, it is assumed that the language of the user that will speak next will be selected, and in practice, the language of the user that will speak following this setting is set. Upon settings of the reference language being completed in step S103, one of the first language and second language is set to the reference language in the data saved in the conversation management storage unit 28, and the reference presentation direction is in an unset state (see (b) in Fig. 2). In such a state, the presentation direction obtained at the time of the subsequent utterance having been made is set as the reference presentation direction. This processing will be described in step S205 in Fig. 8.

In step S104, the translation device 1 performs recording-start processing. In the recording-start processing, the timing to start recording is appropriately decided, and recording is started based on the decided timing. Details will be described later.

In step S105, the translation device 1 performs recording-end processing. In the recording-end processing, the timing to stop recording processing started in step S104 is appropriately decided, and recording is stopped based on the decided timing. Details will be described later.

In step S106, the translation device 1 performs confirmation processing of the speech recognition results. In the confirmation processing of speech recognition results, the conversation control unit 22 displays the results of speech recognition by the speech recognition processing unit 14 on the display screen 18. The speaker can confirm whether or not the content of his/her own speaking and the content of speech recognition by the translation device 1 match. In a case where the speech recognition results by the translation device 1 do not match, the speaker can cancel the speech recognition results and speak again. Details will be described later.

In step S107, the translation processing unit 20 performs translation, using text that is the speech recognition results displayed on the display screen 18 confirmed by the speaker, the language used for speaking, and the language for the translation results which will serve as output, as the input thereof, by the translation processing unit 20, and generates translated text as the results thereof. Now, the language used for speaking can be distinguished from the reference language set in the conversation management storage unit 28, the reference presentation direction, and the attitude (or presentation direction) of the translation device 1 when speaking, as described above. Accordingly, the language of the translated text obtained as the translation results is the language out of the first language and second language that is not the language used for the speaking. The generated translated text is saved in the conversation management storage unit 28 as translation results.

In step S108, the conversation control unit 22 displays the results of translation processing by the translation processing unit 20 on the display screen 18. The display control unit 16 generates a display image for the listener, using, out of the first language and the second language, the language that is not the language used for speaking, and outputs the translation results to the display screen 18. The translation results used are the information generated in step S107 and saved in the conversation management storage unit 28 as translation results.

In step S109, the speech synthesizing unit 30 generates synthesized speech signal data, using the translation results generated in step S107 and saved in the conversation management storage unit 28 as translation results, and the language used for translation. The generated synthesized speech signal data is output from the audio output unit 32 and speaker 34 so as to be heard by the listener.

Fig. 8 is a flowchart illustrating the recording-start processing of the translation device 1 according to the present embodiment, and illustrates the processing of step S104 in Fig. 7 in detail.

In step S201, the sensor value processing unit 26 obtains the initial presentation direction. Specifically, the sensor value processing unit 26 obtains sensor values generated by the gyro sensor 24, and calculates the presentation direction of the translation device 1. In this step, the translation device 1 is in the attitude illustrated in (a) in Fig. 4, for example. The conversation control unit 22 then saves the presentation direction that the sensor value processing unit 26 has calculated in the conversation management storage unit 28 as the "initial presentation direction".

In step S202, the sensor value processing unit 26 obtains the presentation direction at the current point in time. Specifically, the sensor value processing unit 26 sequentially obtains sensor valves that are constantly changing in accordance with operations of the speaker, and calculates the presentation direction of the translation device 1 using the obtained sensor values. Thus, the conversation control unit 22 obtains the presentation direction that is constantly changing in accordance with operations of the speaker.

In step S203, the conversation control unit 22 determines whether or not the difference between the initial presentation direction obtained in step S201 and the presentation direction obtained in step S202 has exceeded the threshold value. This threshold value is set based on the "sensitivity of attitude" settings saved in the conversation management storage unit 28. Accordingly, whether or not the display screen 18 of the translation device 1 has been inclined toward the speaker is determined ((b) in Fig. 4). Note that this threshold value is equivalent to a second predetermined angle.

In a case where the difference in presentation directions has exceeded the threshold value in step S203 (yes in step S203), the flow advances to step S204. Otherwise, (no in step S203) step S202 is attempted again.

In step S204, the conversation control unit 22 checks the contents of settings regarding the reference language and reference presentation direction in the conversation management storage unit 28. Specifically, in a case where only the reference language has been set and the reference presentation direction settings are missing (i.e., unset), which is to say that the direction of the person who will use the reference language to speak is unset (yes in step S204), the conversation control unit 22 advances the flow to step S205. Otherwise, the flow advances to step S206.

As described above in step S204, step S205 is executed in a case where only the reference language has been distinguished and the reference presentation direction is unset. The attitude of the translation device 1 at this time is in a state where the display screen 18 is facing toward the speaker side, such as illustrated in (b) in Fig. 4, for example. The attitude of the translation device 1 at this time is obtained from the gyro sensor 24 and stored in the conversation management storage unit 28 as the reference presentation direction. Accordingly, thereafter when the presentation direction of the translation device 1 is facing the same direction as the reference presentation direction, the reference language is the language that the speaker uses, and in a case where the presentation direction of the translation device 1 is facing any other direction, the language out of the first language and second language that is not the reference language is the language that the speaker uses.

In step S206, the audio input control unit 12 executes recording-start processing of audio, and starts recording audio of the speaker input from the microphone 10.

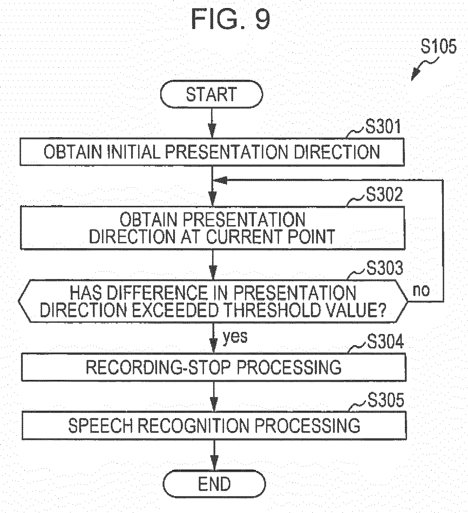

Fig. 9 is a flowchart illustrating recording-end processing in the translation device 1 according to the present embodiment, illustrating in detail the processing in step S105 in Fig. 7.

In step S301, the sensor value processing unit 26 obtains the initial presentation direction. Specifically, the sensor value processing unit 26 obtains sensor values generated by the gyro sensor 24, and calculates the presentation direction of the translation device 1. In this step, the attitude of the translation device 1 is that illustrated in (b) in Fig. 4, for example. The conversation control unit 22 sets this as the "initial presentation direction" in the settings information in the conversation management storage unit 28. Note that in a case where the "initial presentation direction" has already been set data the time of this setting, it may be overwritten.

In step S302, the sensor value processing unit 26 obtains the presentation direction at the current point in time. Specifically, the sensor value processing unit 26 obtains sensor valves that are constantly changing in accordance with operations of the speaker, and calculates the presentation direction of the translation device 1 using the obtained sensor values. Thus, the conversation control unit 22 obtains the presentation direction that is constantly changing in accordance with operations of the speaker.

In step S303, the conversation control unit 22 determines whether the difference between the initial presentation direction obtained in step S301 and the presentation direction obtained in step S302 has exceeded the threshold value. This threshold value is set based on the sensitivity saved in the conversation management storage unit 28. Accordingly, whether or not the display screen 18 of the translation device 1 has been distanced from the direction facing the speaker is determined ((c) in Fig. 4). In a case where this difference has exceeded the threshold value (yes in step S303), the flow advances to step S304. Otherwise, (no in step S303) step S302 is attempted again. Note that this threshold value is equivalent to a third predetermined angle.

In step S304, the audio input control unit 12 executes recording-end processing of audio, and ends recording of audio of the speaker that is input from the microphone 10. Thus, the audio input control unit 12 generates audio signal data of audio signals obtained from the time of recording-start processing in step S206 (Fig. 8) to the time of recording-end processing in step S304.

In step S305, the speech recognition processing unit 14 converts the audio signal data into text by performing speech recognition processing, from the audio signal data generated in step S304 and the language distinguished from the presentation direction of the translation device 1 when spoken, and saves in the conversation management storage unit 28 as speech recognition results.

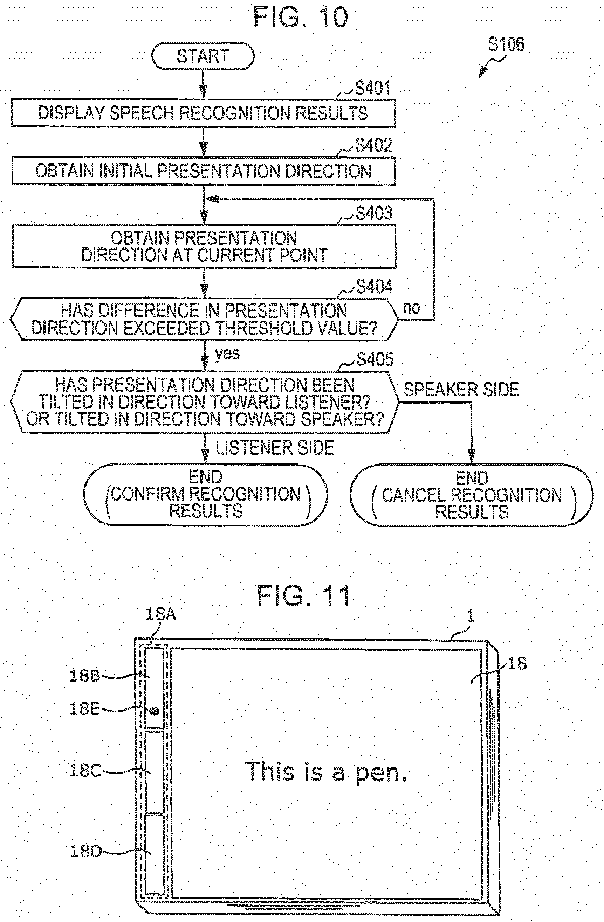

Fig. 10 is a flowchart of speech recognition results confirmation processing in the translation device 1 according to the present embodiment, illustrating the processing of step S106 in Fig. 7 in detail.

In step S401, the display control unit 16 obtains the text generated in step S305 (Fig. 9) and saved as speech recognition results in the conversation management storage unit 28, and generates display data to be output to the display screen 18. Upon the generated display data being output to the display screen 18, the display screen 18 displays the text based on the display data. The text displayed on the display screen 18 is displayed in the language that the speaker uses, in the attitude illustrated in (c) in Fig. 4, so the speaker can confirm whether speech recognition processing that he/she intended has been performed, by the text displayed on the display screen 18. In a following step, processing is performed of one or the other of cancelling the speech recognition results and re-recording, or finalizing the speech recognition results and presenting the translation results thereof to the listener, in accordance with which direction the speaker inclines the translation device 1.

In step S402, the sensor value processing unit 26 obtains the initial presentation direction. Specifically, the sensor value processing unit 26 obtains sensor values generated by the gyro sensor 24, and calculates the presentation direction of the translation device 1. In this step, the attitude of the translation device 1 is that illustrated in (c) in Fig. 4, for example. The conversation control unit 22 saves the presentation direction that the sensor value processing unit 26 has calculated as the "initial presentation direction" in the conversation management storage unit 28. Note that in a case where the initial presentation direction has already been set data the time of this setting, it may be overwritten.

In step S403, the sensor value processing unit 26 obtains the presentation direction at the current point in time. Specifically, the sensor value processing unit 26 obtains sensor valves that are constantly changing in accordance with operations of the speaker, and calculates the presentation direction of the translation device 1 using the obtained sensor values. Thus, the conversation control unit 22 obtains the presentation direction that is constantly changing in accordance with operations of the speaker.

In step S404, the conversation control unit 22 determines whether the difference between the initial presentation direction obtained in step S402 and the presentation direction obtained in step S403 has exceeded the threshold value. In a case where the difference has exceeded the threshold value (yes in step S404), the flow advances to step S405. Otherwise, (no in step S404) step S403 is attempted again. Note that this threshold value is equivalent to a first predetermined angle.

In step S405, the conversation control unit 22 determines whether the presentation direction has been inclined to face toward the listener, or whether the presentation direction has been inclined to face toward the speaker. Depending on this, the conversation control unit 22 branches the processing into a case where the presentation direction has been inclined toward the speaker side such as in (d) in Fig. 4, and a case where the presentation direction has been inclined toward the listener side such as in (e) in Fig. 4.

A case of being inclined toward the speaker side such as in (d) in Fig. 4, is a case where the speaker who has viewed the speech recognition results displayed on the display screen 18 judges that the speech recognition results are different from his/her intent, for example.

In a case where the presentation direction has been inclined to face toward the listener in the above step S405 ("listener side" in step S405), the speech recognition results displayed on the display screen 18 in step S401 are finalized, and the series of processing regarding this flowchart end. On the other hand, in a case where the presentation direction has been inclined to face toward the speaker in the above step S405 ("speaker side" in step S405), the speech recognition results displayed on the display screen 18 in step S401 are cancelled, and the series of processing regarding this flowchart end.

Thus, the translation device 1 can improve the precision of speech recognition in translation processing between two people conversing. The translation device 1 also enables conversation between different languages to be easily performed, by natural operations by the user of the translation device 1.

Note that while operations of the translation device 1 in conversation between two people have been assumed in the description of the present embodiment, this may be used by one person as well.

Also, the speech recognition processing unit 14 does not have to be within the translation device 1 as illustrated in Fig. 1, and may be disposed on an external server via a communication path, such as a cloud server.

There also is no need for the translation processing unit 20 to be within the translation device 1 as illustrated in Fig. 1, and may be disposed on an external server via a communication path, such as a cloud server.

The display screen 18 does not need to be within the translation device 1 as illustrated in Fig. 1. It is sufficient for the display screen 18 to be at a location that the user can confirm, and may be substituted with an external display connected to the translation device 1, for example.

Although an example of outputting the translation results by synthesized speech has been described in the present embodiment, confirmation by synthesized speech is not indispensable. In a case where there is no need to output the translation results by synthesized speech, the speech synthesizing unit 30, audio output unit 32, and speaker 34 are unnecessary.

Note that the translation device 1 may have a display screen 18A that indicates the state of operations relating to translation by the translation device 1, in addition to the display screen 18 described above. The display screen 18A will be described by way of a specific example.

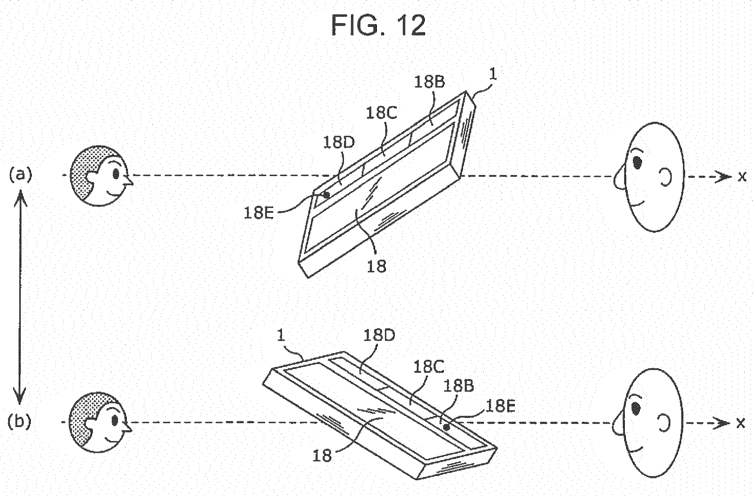

Fig. 11 is an explanatory diagram of the display screen 18A according to the present embodiment. Fig. 12 is an explanatory diagram of the display screen 18A according to the present embodiment. The display screen 18A illustrated in Fig. 11 and Fig. 12 include display regions 18B, 18C, and 18D.

The display regions 18B, 18C, and 18D are provided corresponding to the attitude of the translation device 1 detected by the gyro sensor 24, i.e., corresponding to the state of operations relating to translation by the translation device 1. That is to say, the display region 18B corresponds to a state where the translation device 1 is displaying translation results (the state of (e) in Fig. 4). The display region 18C corresponds to a state where the translation device 1 is displaying speech recognition results (the state of (c) in Fig. 4). The display region 18D corresponds to a state where the translation device 1 is recording (the state from (b) to (c) in Fig. 4).

An indicator (an indicator or an image that is an indicator) 18E is displayed in one of the display regions 18B, 18C, and 18D. The state corresponding to the display region of the display regions 18B, 18C, and 18D in which the indicator 18E is displayed indicates the current state of the translation device 1. Thus, the indicator 18E (equivalent to an image) is displayed on the display screen 18A in accordance with the attitude of the translation device 1.

For example, in a state where the translation device 1 is recording the audio from the speaker, the indicator 18E is displayed in display region 18D ((a) in Fig. 12). Accordingly, the speaker can have the translation device 1 record the audio while recognizing that the translation device 1 is recording his/her voice without mistake. This is advantageous in that in a case where the attitude of the translation device 1 changes due to unintentional shaking of the hand by the speaker, and the recording state ends, the speaker can recognize this and take appropriate actions.

In a state where the translation device 1 is displaying translation results, the indicator 18E is displayed in the display region 18B ((b) in Fig. 12). Accordingly, the listener can recognize that the translation device 1 is displaying translation results.

Note that while the display position of the indicator 18E in each of the display regions may be optional, this may change in accordance with the attitude of the translation device 1. For example, in the case of (a) in Fig. 12, the closer the presentation direction draws to the negative direction on the x axis, the display position of the indicator 18E may change to a position farther away from the display region 18C. In the case of (b) in Fig. 12, the closer the presentation direction draws to the positive direction on the x axis, the display position of the indicator 18E may change to a position farther away from the display region 18C.

That is to say, display of the indicator 18E may include display of the indicator 18E corresponding to the difference in angle between the presentation direction and the direction set beforehand as the direction toward the listener or the direction set beforehand as the direction toward the speaker. The display of the indicator 18E may also include display of an image in accordance with the presentation direction (a) having drawn close toward the direction set beforehand as the direction toward the listener by a first predetermined angle, or (b) having drawn close toward the direction set beforehand as the direction toward the speaker by a second predetermined angle. Accordingly, change in the attitude of the translation device 1 can be expressed by the display position of the indicator 18E.

Also, the color of the display region corresponding to the current state of the translation device 1, out of the display regions 18B, 18C, and 18D, may be changed. This is advantageous in that the speaker and listener can recognize the current state of the translation device 1 more intuitively.

The components in the above-described embodiments may be configured of dedicated hardware, or may be realized by executing software programs appropriate for the components. The components may be realized by a program executing unit such as a CPU or processor or the like reading out and executing software programs recorded in recording media such as a hard disk or semiconductor memory or the like. Now, software that realizes the translation device according to the above-described embodiments is a program such as the following.

That is to say, this program causes a computer to execute a control method of a translation device that includes a microphone, a sensor that detects an attitude of the translation device, and a display screen, the control method including generating audio signals indicating audio from a first user by the microphone, detecting change in the attitude of the translation device, detected by the sensor, and displaying, on the display screen, second text generated by translation processing performed on first text obtained by speech recognition of the audio signals generated until detection of change in attitude of the translation device.

Although the translation device according to one or multiple forms has been described by way of embodiments, the present disclosure is not restricted to these embodiments. Embodiments of various modifications conceivable by one skilled in the art, and forms configured by combining components in different embodiments, may be included in the scope of one or multiple forms without departing from the essence of the present disclosure.

### Industrial Applicability

The present disclosure is usable in a translation device that suppresses smooth conversation via the translation device from being impeded. Reference Signs List

- 1: translation device
- 10: microphone
- 12: audio input control unit
- 14: speech recognition processing unit
- 16: display control unit
- 18, 18A: display screen
- 18B, 18C, 18D: display region
- 18E: indicator
- 20: translation processing unit
- 22: conversation control unit
- 24: gyro sensor
- 26: sensor value processing unit
- 28: conversation management storage unit
- 30: speech synthesizing unit
- 32: audio output unit
- 34: speaker
- 40: control unit
- 50, 60: screen
- 52, 54, 56, 62: button

## Claims

1. A control method of a translation device,
wherein the translation device includes a microphone, a sensor that detects an attitude of the translation device, and a display screen,
the control method comprising:
generating audio signals indicating audio from a first user by the microphone;
detecting change in the attitude of the translation device, detected by the sensor; and
displaying, on the display screen, second text generated by translation processing performed on first text obtained by speech recognition of the audio signals generated until detection of change in attitude of the translation device.

2. The control method according to Claim 1,
wherein detection of change in attitude of the translation device includes detecting that a presentation direction, which is a direction parallel to a normal of the display screen and is a direction for the display screen to present images, has neared a direction set beforehand as a direction from the translation device toward a second user who receives speech by the first user, by a first predetermined angle.

3. The control method according to Claim 2, further comprising:
starting to generate the audio signals by the microphone, upon detecting that the presentation direction has drawn closer to a direction set beforehand as a direction toward the first user from the translation device, by a second predetermined angle.

4. The control method according to either Claim 2 or 3, further comprising:
ending the generating of audio signals by the microphone, upon detecting that the presentation direction has been distanced from a direction set beforehand as a direction toward the first user from the translation device, by a third predetermined angle, the first text is obtained by performing speech recognition processing on the audio signals, and the obtained first text is displayed on the display screen.

5. The control method according to Claim 4, further comprising:
generating new audio signals, upon detecting that, after displaying the first text on the display screen, the presentation direction has drawn closer to the direction set beforehand as the direction toward the first user from the translation device, by the first predetermined angle.

6. The control method according to any one of Claims 1 through 5,
wherein the translation device stores correlation information correlating the attitude of the translation device and language information indicating a language for performing speech recognition processing in the attitude,
the control method further comprising:
performing the speech recognition processing using a language indicated by language information correlated with the attitude of the translation device at the current point in time in the correlation information.

7. The control method according to Claim 6, further comprising:
performing the translation processing using a language indicated by language information correlated with the attitude of the translation device at the current point in time in the correlation information, as a translation source language.

8. The control method according to any one of Claims 1 through 7,
wherein an image is displayed on the display screen in accordance with the detected attitude of the translation device.

9. The control method according to Claim 8,
wherein display of the image in accordance with the attitude of the translation device includes displaying the image in accordance with a difference in angle between a presentation direction that is a direction parallel to a normal of the display screen and is a direction for the display screen to present images, and a direction set beforehand as a direction toward a second user who receives speech by the first user or a direction set beforehand as a direction from the translation device toward the first user.

10. The control method according to Claim 8,
wherein display of the image in accordance with the attitude of the translation device includes displaying the image in accordance with the presentation direction that is a direction parallel to a normal of the display screen and is a direction for the display screen to present images
having drawn close toward the direction set beforehand as the direction toward the second user who receives the speech by the first user, by a first predetermined angle, or
having drawn close toward the direction set beforehand as the direction toward the first user, by a second predetermined angle.

11. A translation device, comprising:
a microphone;
a sensor that detects an attitude of the translation device;
an audio input control unit that generates audio signals indicating audio from a first user by the microphone; and
a display control unit that, upon detecting change in the attitude of the translation device detected by the sensor, displays second text generated by translation processing performed on first text obtained by speech recognition of the audio signals, on a display screen.

12. A program that causes a computer to execute the control method according to any one of Claims 1 through 10.
